# EUROPEAN PATENT APPLICATION

(11) **EP 3 425 288 A1**
(43) Date of publication of application: **09.01.2019**
(21) Application number: 17180348.9
(22) Date of filing: 07.07.2017
(51) Int. Cl.: F24D 17/00, F28D 7/08

(54) **SHOWER SYSTEM AND HEAT EXCHANGER DEVICE FOR A SHOWER**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: V.O.

(57) **Abstract**

Tap water for dispensing from a shower head is pre-warmed under the floor level of a shower space by means of shower drain water from the floor. A heat exchanger device below the floor contains separated water collection regions. A pipe in the water circuit for conducting tap water flow to a shower head has parts located above the floor of the respective the water collection regions. Water distributors above the parts of the pipe distribute drain water over an exterior surface of the parts of the pipe above the respective water collection regions. The drain water from the floor is supplied first to a water distributor above one of the water collection regions to distribute the drain water over part of the tap water pipe below it. Subsequently, the drain water is pumped up from the water collection region under this distributor to the other water distributor to warm tap water in the part of the pipe below the other water distributor. In this way the height of the space needed below the floor is reduced. The pump is preferably driven by the tap water, making use of its pressure.

## Description

### Field of the invention

The invention relates to a heat exchanger device for a shower and to a shower system comprising such a heat exchanger.

### Background

It is known to use a heat exchanger in a shower system to pre-heat water for use in the shower, using heat exchange between tap water and warm drain water from the floor of the shower. EP 2453194 discloses such a heat exchanger, which is located in the floor of the shower space. The heat exchanger comprises a pipe in the connection between a tap water input and the shower head. Successive sections of the pipe of the heat exchanger run form a vertical stack. The drain water is fed to the outside of the topmost section, from whence it drips down to successively lower sections. This results in efficient heat exchange, because vertical stacking increases the length of the pipe of the heat exchanger that comes into contact with the warm drain water.

However, increasing efficiency by increased vertical stacking may require raising the floor of the shower space, which is undesirable. In a floor level shower space, it may even be impossible. This problem could be solved by also using pipe sections of the heat exchanger in parallel to increase the contact area.

But the gain in efficiency that can be realized in this way is limited by the available drain water volume, which for a typical shower is between 100 and 200 cubic centimeter per second. Increasing the area of the parallel pipe section decreases the drain water flow per unit pipe length. When this flow becomes too small, e.g. below one cubic centimeter per second per centimeter pipe length, no significant efficiency gain is realized by adding parallel pipe sections as dry spots arise and the effective heat exchange surface can even be reduced.

### Summary

Among others, it is an object to increase the efficiency of a heat exchanger in the floor of a shower space.

A heat exchanger device is provided for use in the floor of a shower. The heat exchanger device comprises
- a basin, or basins, comprising a first and second water collection region, floors of the first and second water collection region being separated from each other;
- a pipe for conducting tap water flow to a shower head, the pipe comprising a first and second part, located above the floor of the first and second water collection region respectively;
- a first and second water distributor located above the first and second part of the pipe respectively, for distributing drain water over an exterior surface of the pipe, a top surface of the first water distributor being located higher than a vertical level of a bottom of the second part of the pipe;
- a water pump, with a water input configured to collect water from the floor of the second water collection region, and a water output coupled to the first water distributor;
- a drain water outlet configured to collect water from the floor of the first water collection region. In this way, efficient heat exchange can be provided using less vertical space under the shower floor. Preferably, the second part of the pipe that is warmed by drain water direct from the floor is connected downstream in the tap water flow direction from the first part of the pipe that is warmed by pumped up drain water. This increases efficiency.

In an embodiment the pump is a water driven pump, comprising a drive channel connected in series with the first and second part of the pipe. In this way no electrical connections for pumping are needed in the floor of the shower space.

In an embodiment the pump comprises an Archimedes' screw. This makes it easier prevent problems due to fouling and this pump is self priming.

In an embodiment at least one of the first and second part of the pipe comprises a vertical stack of serially connected pipe sections. In this way drain water can heat successive pipe sections, use of the pump making it possible to reach the same efficiency with a reduced number of stacked pipe sections in the vertical stacks.

The first and second part of the pipe, or stacks in the first and second part of the pipe are preferably configured to be at the same, or at least overlapping, vertical height when installed under the floor of the shower space. The same preferably goes for the vertical level of the water distributors and the floors of the regions of the basin(s).

A method is provided that uses a heat exchanger device below the floor level of the shower space. The heat exchanger device contains separated water collection regions. A pipe in the water circuit for conducting tap water flow to a shower head has parts located above the floor of the respective the water collection regions. Water distributors above the parts of the pipe distribute drain water over an exterior surface of the parts of the pipe above the respective water collection regions. The drain water from the floor is supplied first to a water distributor above one of the water collection regions to distribute the drain water over part of the tap water pipe below it. Subsequently, the drain water is pumped up from the water collection region under this distributor to the other water distributor to warm tap water in the part of the pipe below the other water distributor. In this way the height of the space needed below the floor is reduced. The pump is preferably driven by the tap water, making use of its pressure.

### Brief description of the drawing

These and other objects and advantageous aspects will become apparent from a description of exemplary embodiments by reference to the following figures.
- Figure 1: shows a schematic of a heat exchanger device for a shower
- Figure 2: shows heat exchanger device with a water driven pump
- Figure 3a,b: show a top view of a heat exchanger device for a shower
- Figure 4: shows a side view of a heat exchanger device for a shower

### Detailed description of exemplary embodiments

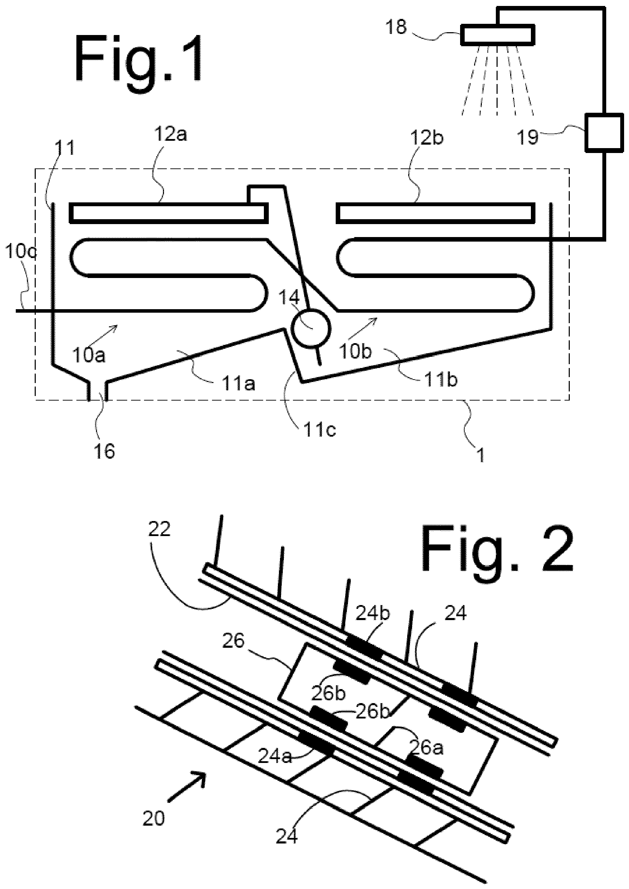

Figure 1 shows a schematic of a heat exchanger device 1 for a shower. Device 1 comprises a pipe comprising a first and second part 10a, b, a basin 11, a first and second water distributor 12a,b, a pump 14 and an outlet 16. First and second part 10a,b of the pipe are connected in series between a tap water input 10c and a shower head 18, so that tap water flows through the interior space of the pipe between tap water input 10c and a shower head 18. The pipe may be a double walled pipe to comply with drinking water safety regulations. Preferably, first part 10a is downstream from the second part 10b in this flow through the interior of the pipe. First and second part 10a,b of the pipe may each be a stacked part, which comprises a plurality of vertically stacked pipe sections of the part, with the interior of the stacked pipe sections connected in series, preferably with successively higher pipe sections successively further downstream from a tap water input 10c through the interior space of the pipe. By way of illustration stacked parts with three pipe vertically stacked sections are shown, but less (e.g. a single one) or more may be used in each stack. Preferably, the stacks in the first and second part extend overlapping height ranges, and more preferably they have substantially the same height range (i.e. height ranges that that do not differ by more than a pipe width). Parts 10a,b may have the same or a different number of stacked pipe sections. First and second part 10a, b may have connectors for installing the heat exchanger device in a shower system. First and second part 10a,b of the pipe are placed above first and second water collection regions 11a,b of basin 11. Basin 11 may have an integral wall surrounding both first and second water collection regions 11a,b, or basin 11 may comprise separate walls of first and second water collection regions 11a,b. First and second water collection regions 11a,b may be located next to each other in a single basin, or at in separate basins at a distance from each other under the floor. Basin 11 comprises a separation 11c between the floors of first and second water collection region 11a,b. If separate basins are used, this inherently provides a separation. Separation 11c need not be a complete separation between the water collection regions: it suffices that separation 11c blocks flow of drain water from the floor of first water collection region 11a to second water collection region 11b. For example, separation 11c may be at least one or two centimeters high. The outer wall of basin 11 may be at least five or ten centimeter high for example. Preferably, first and second water collection regions 11a,b each have a slanting bottom, inclined downwards to the input of pump 14 and to outlet 16 respectively.

The relation between first and second water distributor 12a,b and first and second part 10a,b of the pipe is preferably selected to make use of the counter flow principle of heat exchangers. According to the counter flow principle, successively more downstream parts of the drain water flow route in the heat exchanger are in heat exchange contact with successively more upstream parts of the tap water flow path. This principle makes use of the fact that the drain water cools down as it progresses downstream along its flow route through the heat exchanger, whereas the tap water warms up as it progresses downstream along its flow path through the heat exchanger. In the present heat exchanger device 1, the region 11a of the basin that contains the outlet 16 is for relatively colder water, and the region 11b of the basin from which pump 14 pumps the water is for relatively warmer water. Accordingly, the part 10a of the tap water pipe closest the input 10c is preferably above the region 11a of the basin that contains the outlet 16 and the part 10b of the tap water pipe closest the shower head 18 is preferably above the region 11b of the basin from which pump 14 pumps the water.

First and second water distributor 12a,b are placed above first and second part 10a, b of the pipe respectively, for distributing drain water over the first and second part 10a,b of the pipe. The top surface of first water distributor 12a is above the vertical level of the bottom of second part 10b of the pipe and preferably at least substantially at the same vertical level as the top surface of second water distributor 12b, i.e. at vertical levels that do not differ so much that the difference require the parts 10a,b of the tap water to be placed at different height levels. First and second water distributor 12a,b may comprise a perforated plate, with openings above the topmost pipe section of the first and second part 10a,b of the pipe respectively. Second water distributor 12b is in communication with a drain of the floor of the shower space. Pump 14 is configured to pump drain water from second water collection region 11b below second part 10b of the pipe to first water distributor 12a. Outlet 16 is in communication with second water collection region 11b below first part 10a of the pipe, to drain water from that second water collection region, e.g. to a sewage system or a grey water circuit.

Heat exchanger device 1 may be part of a shower installation that also comprises shower head 18 and a heater device 19 between heat exchanger device 1 shower head 18. Heater device 19 may comprise an electrical heater to heat the water to a desired temperature and/or a mixing valve to add heated water to the water from the heat exchanger to obtain a mix with the desired temperature.

In operation, relatively cold water enters at tap water input 10c and the tap water flows from there through first and second part 10a,b of the pipe towards shower head 18. Hot shower water from shower head 18 reaches the floor of the shower space as drain water, from where the drain water flows through second water distributor 12b. Second water distributor 12b distributes the drain water from the floor over second part 10b of the pipe, where the drain water warms tap water flowing within second part 10b of the pipe. After the drain water drips from second part 10b of the pipe to second water collection region 11b of basin 11, the drain water is pumped up by pump 14 to first water distributor 12a. First water distributor 12a distributes the drain water from below the second part of the pipe over first part 10a of the pipe, where the drain water warms tap water flowing within first part 10a of the pipe. After the drain water drips from first part 10a of the pipe to first water collection region 11a of basin 11, the drain water flows to outlet 16.

As will be appreciated, pump 14 would not be necessary when first part 10a of the pipe would be located below second part 10b of the pipe. Using pump 14 makes it possible to provide for similar heat exchange with first part 10a of the pipe placed at a higher vertical level. This reduces the height needed for the heat exchanger device. Preferably, the tops of first and second part 10a,b of the pipe are at substantially the same vertical level. This can be used to minimize the height of the heat exchanger device. For example, the height of the heat exchanger device may be less than twenty centimeter, or even less than fifteen or ten centimeter. This means that the heat exchanger device can be placed in a shower space with a floor that is substantially at the same level as the floor of the bathroom, or that, when a shower cabin on top of the bathroom floor is used, that the raised floor of the shower cabin can be kept lower. Preferably, first and second water distributor 12a,b are at the same vertical level. Preferably, first water distributor 12a receives drain water only via the pump. But increased efficiency is already realized already if an additional part of the water distributed via first water distributor 12a does not come from the pump, but e.g. directly from the floor of the shower space.

As will be appreciated, according to the counter flow principle, the tap water warms up as it flows through the first and second part 10a,b of the pipe. In the first part 10a of the pipe, which lies upstream from second part 10b of the pipe, the water is colder than in the second part 10b of the pipe. Conversely, the drain water cools down when the drain water is distributed over second part 10b of the pipe it is warmer than when it is distributed over first part 10a of the pipe. This counter current flow increases heat exchange efficiency.

Although it is preferred to connect the interior of the first and second part 10a,b of the pipe in series to maximize efficiency, it should be appreciated that alternatively at least one of first and second part 10a,b may comprise a plurality of sections of which the interiors are connected in parallel. Even first and second part 10a,b could have their interiors connected in parallel between tap water input 10c and shower head 18. In each case, use of pump 14 makes it possible to reduce the height of the heat exchanger device.

It should be noted that pump 14 needs to pump up only a small volume of drain water (e.g. 100-200 cubic centimeter per second) only over a small height, for example over ten or twenty centimeters. Thus, the required pump power is small (g*height*weight/second about 0.1-0.2 watt).

Preferably, pump 14 is a water powered pump, which is driven directly or indirectly by power generated by tap water flow between the water inlet 10c and shower head 18. The tap water pressure provides sufficient power to raise the same amount of tap water over a much greater height, and detraction of some of this power to raise up the drain water does not significantly affect operation of the shower. As an alternative a pump driven by exterior power may be used, e.g. an electrically powered pump.

Figure 2 illustrates an exemplary embodiment wherein a water driven pump 20 is used, with an intermediate part 22 of the pipe as a central drive channel 22 and an Archimedes screw 24 concentrically around the central drive channel 22. Intermediate part 22 may be connected between first and second part 10a,b of the pipe, with the interior space of intermediate part 22 connecting the interior space of first and second part 10a,b of the pipe. In the interior space of central drive channel 22 a rotatable cylinder 26 with one or more interior turbine blades 26a is located, and one or more magnets 26b in the wall of rotatable cylinder 26. One or more corresponding magnets 24a,b are provided in the inner axle of Archimedes screw 24. In operation, tap water flow through the interior space of central drive channel 22 causes rotatable cylinder 26 to rotate with central drive channel 22. Magnets 24a,b, 26a,b transfer this rotation to Archimedes screw 24. Use of an Archimedes screw 24 has the advantage that the pump is more robust against fouling of the drain water.

It should be appreciated that the water driven pump 20 of figure 2 is merely one example of a pump that may be used. As noted, a pump driven by external power may be used instead. However, for reasons of safety and complexity a pump that is directly or indirectly driven by the tap water flow is preferred.

Indirectly driven pumps may comprise a dynamo driven by tap water flow in a drive channel, in combination with an electrically driven pump that is electrically powered by an output of the dynamo. An exemplary tap water driven dynamo may comprise a rotatable cylinder like that of figure 2, with external windings for capturing the magnetic flux of magnets on the rotatable cylinder. But other dynamo designs and any type of electrically driven water pump may be used.

Similarly, alternatives for the direct driven pump of figure 2 may be used, wherein the pump has a drive channel that is part of the tap water connection between tap water inlet 10c and shower head 18. Preferably contactless transmission, such as magnetic transmission, is used to transmit motion generated in the drive channel to pumping motion that is applied to the drain water. This avoid risks of contaminating the tap water.

The drive channel of the directly or indirectly driven pump may be located in a connection between first and second part 10a,b of the pipe, as shown in figure 1. This decreases the distance between the drive channel and the pumping part of the pump and it may increase the efficiency in the case of a direct driven pump. But alternatively, the drive channel may be located elsewhere, e.g. between the tap water input 10c and first and second part 10a,b, or between first and second part 10a,b the shower head 18.

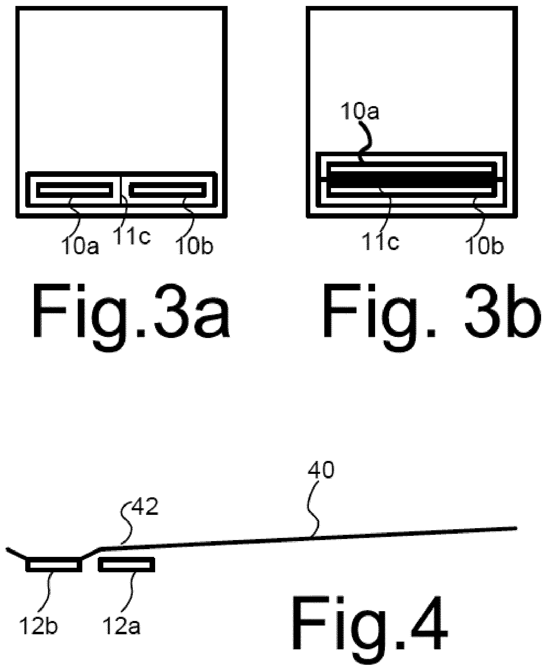

Externally driven pumps and directly or indirectly tap water driven pumps may all be combined with an Archimedes screw 24 that has the advantage that it makes the pump is more robust against fouling of the drain water. Figure 3a shows a top view of an embodiment of a heat exchanger device for a shower. As can be seen, in this embodiment first and second part 10a,b of the pipe are located in a successive parts of a slot, with the separation 11c perpendicular to the longest direction of the slot. Figure 3b shows a top view of an alternative embodiment wherein first and second part 10a,b of the pipe are located in parallel (still connected in series in the hydraulic circuit) next to each other in a slot, with the separation 11c in parallel with the longest direction of the slot. In both embodiments first and second part 10a,b are horizontally only one pipe wide in the direction perpendicular to the length of the slot, although each may contain a plurality of vertically stacked pipe sections. This maximizes the volume of drain water per unit pipe length, improves the wetting, which in turn increases heat exchange efficiency. In the embodiment of figure 3a, the volume of drain water per unit pipe length is even higher than in the embodiment of figure 3b.

However, it should be appreciated that other layouts, that are more than one pipe wide in the first and/or second part 10a,b are possible, even with the same length of pipe on top. An example of such layout is an elongate form with a spirally curved coil.

Figure 4 shows a side view of an embodiment of a heat exchanger device for a shower. The shower has a sloping floor 40 with a drain outlet to second water distributor 12b. A cover 42, which may be part of floor 40 keeps water from floor 40 from directly entering first water distributor 12a. Although this is illustrated for an embodiment wherein first and second part 10a,b of the pipe are located next to each other as in figure 3b, it should be appreciated that a cover can be used in other configurations as well e.g. as in figure 3a.

Although embodiments have been shown wherein the drain water from floor 40 flows directly through second water distributor 12b, it should be appreciated that alternatively a water lock may be placed functionally between floor 40 and first water distributor 12a.

Preferably, the first and second water distributor 12a,b are at least at substantially the same vertical level. As used herein, water distributors are said to be at substantially the same vertical level when their vertical level does not differ by more than half the height of (the stack of sections of) first or second part 10a,b of the pipe. The water distributors may be at different levels as needed to provide room for a cover 42 or a water lock for example. Although embodiments have been described with two water distributors 12a,b, above two collection regions, it should be appreciated that more water distributors above more collection regions in series or in parallel may be used to warm up the tap water. The pump may work to supply drain water to a plurality of such distributors and/or from a plurality of collection regions, or a plurality of pumps may be used.

## Claims

1. A heat exchanger device for use in the floor of a shower, comprising
- a basin, or basins, comprising a first and second water collection region, floors of the first and second water collection region being separated from each other;
- a pipe for conducting tap water flow to a shower head, the pipe comprising a first and second part, located above the floor of the first and second water collection region respectively;
- a first and second water distributor located above the first and second part of the pipe respectively, for distributing drain water over an exterior surface of the pipe, a top surface of the first water distributor being located higher than a vertical level of a bottom of the second part of the pipe;
- a water pump, with a water input configured to collect water from the floor of the second water collection region, and a water output coupled to the first water distributor;
- a drain water outlet configured to collect water from the floor of the first water collection region.

2. A heat exchanger device according to claim 1, wherein the pump is a water driven pump, comprising a drive channel connected in series with the first and second part of the pipe.

3. A heat exchanger device according to any of the preceding claims, wherein the pump comprises an Archimedes' screw configured to pump up the drain water, the pump being configured to use energy from the tap water flow to drive rotation of the Archimedes' screw.

4. A heat exchanger device according to any of the preceding claims, wherein at least one of the first and second part of the pipe comprises a vertical stack of serially connected pipe sections.

5. A heat exchanger device according to any of the preceding claims, wherein the first and second part of the pipe comprises a first and second vertical stack of serially connected pipe sections above the floors respectively, the first and second vertical stack extending overlapping height ranges.

6. A heat exchanger device according to any of the preceding claims, wherein first and second water distributor are located at substantially the same vertical level.

7. A heat exchanger device according to any of the preceding claims, wherein first and second water collection region are located next to each other.

8. A heat exchanger device according to any of the preceding claims, wherein the first water distributor is configured to receive drain water only via the pump.

9. A shower system comprising the heat exchanger device of any one of the preceding claims located under the floor level of a shower space, with the second water distributor configured to receive drain water from the floor and the drain water outlet coupled to a sewage system or a grey water system.

10. A shower system according to claim 9, wherein the second part of the pipe is connected downstream in the tap water flow direction from the first part of the pipe.

11. A shower system according to claim 9 or 10, wherein the first water distributor is configured to receive drain water only via the pump.
